# EUROPÄISCHE PATENTSCHRIFT

(11) **EP 4 219 268 B1**
(45) Veröffentlichungstag und Bekanntmachung des Hinweises auf die Patenterteilung: **15.01.2025**
(21) Anmeldenummer: 22206890.0
(22) Anmeldetag: 11.11.2022
(51) Int. Cl.: B62D 5/00, B62D 6/00

(54) **KRAFTFAHRZEUGLENKUNG UND VERFAHREN ZUM BETRIEB EINER SOLCHEN**
MOTOR VEHICLE STEERING SYSTEM AND METHOD FOR OPERATING SAME
DIRECTION DE VÉHICULE AUTOMOBILE ET PROCÉDÉ DE FONCTIONNEMENT D'UNE TELLE DIRECTION

(30) Priorität: 26.01.2022 DE 102022200848
(43) Veröffentlichungstag der Anmeldung: 02.08.2023
(73) Patentinhaber: VOLKSWAGEN AG, 38440 Wolfsburg (DE)
(72) Erfinder: Heinrich, Felix, 38124 Braunschweig (DE); Willuhn, Dennis, 38518 Gifhorn (DE); Liesner, Henrik, 38550 Isenbüttel (DE)

(56) Entgegenhaltungen:
- US-A1- 2002 161 499

## Beschreibung

Die Erfindung bezieht sich auf eine Kraftfahrzeuglenkung, umfassend ein Lenksäulenmodul mit einer Lenkungshandhabe zur Eingabe eines fahrerseitigen Lenkbefehls, einem Lenkwinkelsensor zur Erfassung eines mit dem Lenkbefehl vorgegebenen Lenkwinkels und einem Drehmomentsensor zur Erfassung eines über die Lenkungshandhabe im Rahmen eines Lenkbefehls aufgebrachten Moments, ein Lenkgetriebe mit einem Lenkungsaktuator zur Darstellung des Lenkbefehls an Fahrzeugrädern, und ein Steuergerät, welches derart konfiguriert ist, um den Lenkungsaktuator in Abhängigkeit des mittels des Lenkwinkelsensors erfassten, über die Lenkungshandhabe vorgegebenen Lenkwinkels anzusteuern und in einem Rückfallmodus den Lenkungsaktuator in Abhängigkeit des mittels des Drehmomentsensors erfassten, über die Lenkungshandhabe aufgebrachten Moments anzusteuern. Weiterhin bezieht sich die Erfindung auf ein Verfahren zum Betrieb einer solchen Kraftfahrzeuglenkung.

Eine gattungsgemäße Kraftfahrzeuglenkung und ein gattungsgemäßes Verfahren zum Betrieb einer solchen sind gleichermaßen aus US 2003/0019685 A1, US 2002/0161499 A1 und US 2002/0144855 A1 bekannt.

Im Normalbetrieb erfolgt die Ansteuerung des Lenkungsaktuators auf Grundlage eines vom Lenkwinkelsensor des Lenksäulenmoduls erfassten Lenkwinkels. Insbesondere bei Lenkungen ohne mechanischen Durchgriff vom Lenksäulenmodul zum Lenkgetriebe werden hohe Anforderungen an die Ausfallsicherheit der Fahrzeuglenkung gestellt. Die Fahrzeuglenkung muss vom Fahrer eines Kraftfahrzeugs auch dann noch bedient werden können, wenn es zu einem Ausfall des Lenkwinkelsensors oder mechanischen Störungen im Lenksäulenmodul kommt, um das Fahrzeug sicher beherrschen zu können.

Eine Möglichkeit hierzu besteht in einer Verdopplung der Sensorik. So kann beispielsweise ein zweiter Lenkwinkelsensor am Lenksäulenmodul vorgesehen werden, um den ersten Lenkwinkelsensor abzusichern. In vorgenannten Stand der Technik wird als Alternative vorgeschlagen, als Absicherung des Lenkwinkelsensors das Signal eines Drehmomentsensors heranzuziehen, so dass ein zweiter Lenkwinkelsensor entfallen kann. Umgekehrt kann über den Lenkwinkelsensor der Drehmomentsensor abgesichert werden.

Grundsätzlich können Signale beider Sensoren auch gemeinsam zum Zweck der Ansteuerung des Lenkungsaktuators herangezogen werden. Grundüberlegung im Stand der Technik ist jedoch, mit einem Teil der vorhandenen Sensorik, insbesondere dem Drehmomentsensor, bei einer Störung eine Lenkfunktion aufrecht zu erhalten, welche es einem Fahrer zumindest erlaubt, das Kraftfahrzeug bei Feststellung einer solchen Störung sicher zum Anhalten zu bringen.

Die vorliegende Erfindung betrifft eine Fortentwicklung dieses technischen Prinzips, welches sich insbesondere für Kraftfahrzeuge mit einer Steer-by-wire Lenkung oder einer Überlagerungslenkung eignet, jedoch generell auch bei anderen Lenkungstypen, insbesondere solchen mit mechanischem Durchgriff, einsetzbar ist. Die Aufgabe der vorliegenden Erfindung kann gegenüber dem oben genannten Stand der Technik darin gesehen werden, ein alternatives Ansteuerungskonzept zur Verbesserung der Ausfallsicherheit bereitzustellen.

Diese Aufgabe wird erfindungsgemäß durch eine Kraftfahrzeuglenkung gemäß Patentanspruch 1 gelöst. Diese Kraftfahrzeuglenkung zeichnet sich dadurch aus, dass im Steuergerät eine Beziehung für eine Lenkstangenverfahrgeschwindigkeit in Abhängigkeit des über Lenkungshandhabe aufgebrachten Moments abgelegt ist und das Steuergerät derart konfiguriert ist, um im Rückfallmodus über den Lenkungsaktuator eine Lenkstangenverfahrgeschwindigkeit in Abhängigkeit des vom Drehmomentsensor erfassten Moments auf Grundlage vorgenannter Beziehung einzustellen.

Um eine Manövrierbarkeit des Fahrzeugs unter Nutzung des erfassten Moments zu gewährleisten, wird erfindungsgemäß auf Grundlage des erfassten Moments nicht etwa eine Position für die Lenkstange am Lenkgetriebe vorgegeben, sondern vielmehr eine Verfahrgeschwindigkeit für die Lenkstange. Zielgröße der Ansteuerung im Rückfallmodus ist also nicht eine bestimmte Lage der Lenkstange, sondern deren Bewegungsgeschwindigkeit. Dies mag auf den ersten Blick überraschend erscheinen. Es hat sich jedoch gezeigt, dass eine Ansteuerung auf Grundlage einer Sollposition für die Lenkstange schwer zu beherrschen ist, da eine solche recht empfindlich auf Änderungen des durch den Drehmomentsensor erfassten Moments reagiert.

Erfindungsgemäß ist einem erfassten Moment eine Lenkstangenverfahrgeschwindigkeit zugeordnet. Hierfür ist eine entsprechende Beziehung im Steuergerät abgelegt, welche im Fall des Rückfallmodus herangezogen wird. Hierdurch können das Lenkgetriebe und damit die Fahrzeugräder mittels des Lenkungsaktuators an die richtige Stelle verfahren werden, ohne dass ein Kontrollverlust entsteht.

Besondere Ausführungsarten der Erfindung sind Gegenstand weiterer Patentansprüche.

So kann die besagte Beziehung als mathematisch stetige Funktion im Steuergerät abgelegt sein, wodurch wenig Speicherplatz benötigt wird.

Es ist jedoch auch möglich, die besagte Beziehung beispielsweise in Form einer Wertetabelle im Steuergerät abzulegen. Für ein erfasstes Moment wird im Rückfallmodus die Lenkstangenverfahrgeschwindigkeit für das wertmäßig nächstgelegene abgespeicherte Momente der Wertetabelle verwendet.

Gemäß einer weiteren besonderen Ausführungsart der Erfindung umfasst das Lenksäulenmodul eine Getriebestufe. Hierbei ist der Drehmomentsensor kinematisch zwischen der Lenkungshandhabe und der Getriebestufe angeordnet, wohingegen der Lenkwinkelsensor von der Lenkungshabe ausgehend betrachtet der Getriebestufe kinematisch nachgelagert ist. Mit dem Drehmomentsensor wird in diesem Fall nicht nur der Lenkwinkelsensor abgesichert. Aufgrund dieses Anordnungsschemas ist es vielmehr auch möglich, Störungen der Getriebestufe abzusichern. Kommt es beispielsweise zu einem Verklemmen in der Getriebestufe, kann über den Rückfallmodus unter Berücksichtigung des am Drehmomentsensor erfassten Moments die Lenkbarkeit des Kraftfahrzeugs aufrechterhalten werden.

In einer Ausführungsvariante der erfindungsgemäßen Fahrzeuglenkung weist das Lenksäulenmodul einen Haptiksimulator zur Simulation einer Lenkungsrückwirkung an der Lenkungshandhabe auf. Die Getriebestufe ist in diesem Fall vorzugsweise zwischen dem Haptiksimulator und der Lenkungshandhabe angeordnet. Auf diese Weise kann in einer Steer-by-wire-Lenkung eine hohe Sicherheit gegen einen Ausfall der Fahrzeuglenkung erzielt werden. Selbst im Störungsfall bleibt eine ausreichende Lenkfunktion vorhanden.

In einer weiteren besonderen Ausführungsart der Erfindung weist die Getriebestufe eine Zahnradstufe auf.

Wie bereits erwähnt, eignet sich das erfindungsgemäße Konzept aufgrund der Gewährleistung einer hohen Ausfallsicherheit für eine Steer-by-wire-Fahrzeuglenkung, bei welcher das Lenkgetriebe und das Lenksäulenmodul mechanisch entkoppelt sind.

Gemäß einer weiteren besonderen Ausführungsart der Erfindung sind das Lenkgetriebe und das Lenksäulenmodul mittels eines Überlagerungsgetriebes mechanisch miteinander gekoppelt. Einem durch den Fahrer aufgebrachten Lenkwinkel kann hierdurch ein zusätzlicher Lenkwinkel überlagert werden, um beispielswiese eine variable Lenkübersetzung zu verwirklichen. Auch in einer solchen Konfiguration bestehen hohe Anforderungen an eine Lenkbarkeit bei einer Störung des Lenkwinkelsensors oder von mechanischen Komponenten zwischen der Lenkungshandhabe und dem Lenkgetriebe.

Die oben genannte Aufgabe wird weiterhin durch ein Verfahren gemäß Patentanspruch 9 gelöst, welches vorzugsweise mit einer Fahrzeuglenkung der vorstehend erläuterten Art ausgeführt wird. Das erfindungsgemäße Verfahren zeichnet sich gegenüber dem oben genannten Stand der Technik insbesondere dadurch aus, dass eine Beziehung für eine Lenkstangenverfahrgeschwindigkeit einer Lenkstange des Lenkgetriebes in Abhängigkeit des über die Lenkungshandhabe aufgebrachten Moments vorgehalten wird, und dass im Rückfallmodus unter Berücksichtigung besagter Beziehung über den Lenkungsaktuator die Lenkstangenverfahrgeschwindigkeit in Abhängigkeit des vom Drehmomentsensor erfassten Moments eingestellt wird. Hieraus ergeben sich die oben im Zusammenhang mit der Fahrzeuglenkung bereits erläuterten Vorteile.

Nachfolgend wird die Erfindung anhand von in der Zeichnung dargestellten Ausführungsbeispielen näher erläutert. Die Zeichnung zeigt in:
- Fig. 1: eine schematische Ansicht einer Fahrzeuglenkung nach einem ersten Ausführungsbeispiel der Erfindung,
- Fig. 2: eine schematische Ansicht einer Fahrzeuglenkung nach einem zweiten Ausführungsbeispiel der Erfindung, und in
- Fig. 3: ein Beispiel für eine funktionale Beziehung zwischen der Lenkstangenverfahrgeschwindigkeit und dem durch den Drehmomentsensor erfassten Moment.

Die nachfolgend näher erläuterten Ausführungsbeispiele beziehen sich jeweils auf eine Kraftfahrzeuglenkung 1, welche sich insbesondere für den Einsatz in Personenkraftwagen und leichten Nutzfahrzeugen eignet.

Diese Kraftfahrzeuglenkung 1 umfasst vorliegend jeweils ein Lenksäulenmodul 10 mit einer Lenkungshandhabe 11, beispielsweise einem Lenkrad, zur Eingabe eines fahrerseitigen Lenkbefehls, ein Lenkgetriebe 20 zur Darstellung des Lenkbefehls an Fahrzeugrädern 2 sowie eine Steuereinrichtung 30, welche beide Einheiten 10 und 20 miteinander verknüpft.

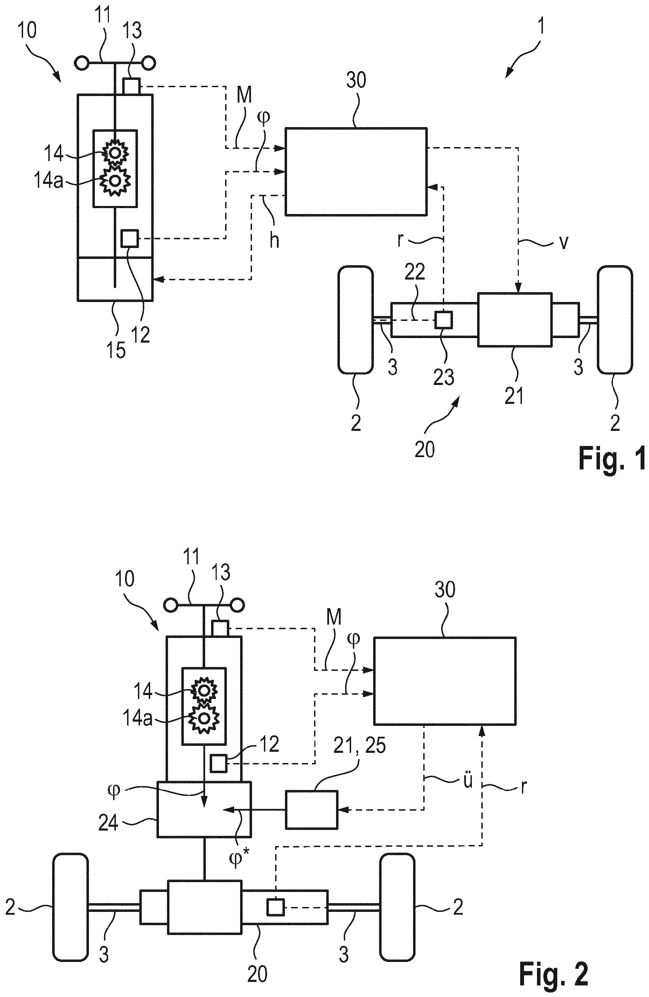

Vor allem bei Steer-by-wire Kraftfahrzeuglenkungen (vgl. Fig. 1) und Überlagerungslenkungen (vgl. Fig. 2) bestehen hohe Anforderungen an die Ausfallsicherheit. Bei einem Fehler beispielsweise infolge eines Spannungsabfalls ist eine zusätzliche redundante Ebene vorgehen, die es dem Fahrer ermöglicht, das Fahrzeug trotzdem weiter zu lenken und sicher zum Stehen zu bringen. Dies beinhaltet, dass für sämtliche potentiellen Fehlerquellen, welche durch Software und/oder Elektrik verursacht werden, dem Fahrer immer eine Möglichkeit bleibt, das Fahrzeug sicher anzuhalten.

Tritt im Lenksäulenmodul 10 hingegen ein mechanischer Fehler auf, beispielsweise durch Verklemmen oder Bruch einer Komponente, kann es gleichwohl dazu kommen, dass die Lenkungshandhabe 11 des Lenksäulenmoduls 10 blockiert. In einem solchen Fall hätte der Fahrer keine Möglichkeit mehr, das Fahrzeug zu lenken. Für einen Spannungsabfall vorgesehene Redundanzen helfen hier mitunter nicht weiter.

Die nachfolgend näher erläuterten Ausführungsbeispiele zeigen Möglichkeiten auf, wie in einer solchen Situation das Fahrzeug trotz eines mechanisch blockierten Lenksäulenmoduls 10 sicher zum Stillstand gebracht werden kann.

Bei dem ersten Ausführungsbeispiel in Fig. 1 in Form einer Steer-by-wire Kraftfahrzeuglenkung 1 weist das Lenksäulenmodul 10 neben der Lenkungshandhabe 11 zur Eingabe eines fahrerseitigen Lenkbefehls ferner einen Lenkwinkelsensor 12 zur Erfassung eines mit dem Lenkbefehl vorgegebenen Lenkwinkels ϕ sowie einen Drehmomentsensor 13 zur Erfassung eines über die Lenkungshandhabe 11 im Rahmen eines Lenkbefehls aufgebrachten Moments M auf.

Der Drehmomentsensor 13 ist vorzugsweise möglichst nahe zur Lenkungshandhabe 11 angeordnet, nämlich zwischen derselben und weiteren mechanischen Komponenten des Lenksäulenmoduls 10, so dass der Drehmomentsensor 13 selbst dann noch ein Signal liefern kann, wenn besagte weiteren mechanischen Komponenten eine Störung solcherart aufweisen sollten, dass die Lenkungshandhabe 11 blockiert ist. In einem solchen Blockadefall können über den Drehmomentsensor 13 gleichwohl weiterhin vom Fahrer an der Lenkungshandhabe 11 aufgebrachte Kräfte erfasst werden. Dem liegt die Überlegung zugrunde, dass ein Fahrer selbst bei blockierter Lenkungshandhabe 11 intuitiv versuchen wird, Kräfte an der Lenkungshandhabe 11 aufzubringen, mit welchen das Fahrzeug aus Sicht des Fahrers in die richtige Richtung gelenkt wird. Dies wird vorliegend als Lenkbefehl im Rückfallmodus interpretiert und zur Bewerkstelligung einer entsprechenden Ansteuerung des Lenkgetriebes 20 herangezogen, um die Lenkbarkeit des Fahrzeugs abzusichern.

Das Lenkgetriebe 20 umfasst hierzu unter anderem einen Lenkungsaktuator 21, beispielsweise in Form eines Elektromotors, zur Darstellung des Lenkbefehls an den Fahrzeugrädern 2. Dazu kann beispielsweise eine Drehbewegung durch ein geeignetes Getriebe in eine axiale Translationsbewegung einer Lenkstange 22 des Lenkgetriebes 20 übersetzt werden, welche mittels Spurstangen 3 an den Fahrzeugrädern 2 im Sinne eines Lenkeinschlags zur Wirkung gebracht wird.

Ferner umfasst die Fahrzeuglenkung 1 ein Steuergerät 30. Diesem sind als Eingangsgrößen vorliegend zumindest das Messsignal des Lenkwinkelsensors 12 und des Drehmomentsensors 13 aufgeschaltet. Ferner können weitere Fahrzeugparameter, wie beispielsweise die Fahrgeschwindigkeit und/oder die Gierrate als Eingangsgrößen berücksichtigt sein. Überdies erhält das Steuergerät 30 zumindest ein Rückkopplungssignal r von einem Sensor 23 am Lenkgetriebe 20, welches einen Rückschluss auf die Lage der Lenkstange 22 ermöglicht. Deren Lage kann beispielsweise direkt, jedoch auch mittelbar, beispielsweise mit Hilfe eines Motorwinkelsensors des Lenkungsaktuators 21 erfasst werden.

Das Steuergerät 30 ist vorliegend derart konfiguriert, um den Lenkungsaktuator 21 in Abhängigkeit des mittels des Lenkwinkelsensors 12 erfassten, über die Lenkungshandhabe 11 vorgegebenen Lenkwinkels ϕ anzusteuern. Gegebenenfalls können weitere Eingangsgrößen wie vorstehend erwähnt zur Ansteuerung des Lenkungsaktuators 21 im Normalbetrieb der Fahrzeuglenkung 1 herangezogen werden, welcher üblicherweise den Hauptbetriebsmodus der Fahrzeuglenkung 1 darstellt.

Weiterhin ist das Steuergerät 30 derart konfiguriert, um einen Rückfallmodus bereitzustellen, mit welchem unter anderem der oben erläuterten Blockadesituation der Lenkungshandhabe 11 begegnet werden kann. In diesem Rückfallmodus wird der Lenkungsaktuator 21 in Abhängigkeit des mittels des Drehmomentsensors 13 erfassten, an über Lenkungshandhabe 11 aufgebrachten Moments M angesteuert. Das Signal des Lenkwinkelsensors 12 wird hierbei nicht benutzt, da dieses bei einer mechanischen Blockade mit hoher Wahrscheinlichkeit fehlerbehaftet ist.

Für den Rückfallmodus ist im Steuergerät 30 eine Beziehung für eine Verfahrgeschwindigkeit v der Lenkstange 22 in Abhängigkeit des über Lenkungshandhabe 11 aufgebrachten Moments M abgelegt.

Das Steuergerät 30 ist derart konfiguriert, um im Rückfallmodus auf Grundlage besagter Beziehung über den Lenkungsaktuator 21 die Lenkstangenverfahrgeschwindigkeit v in Abhängigkeit des vom Drehmomentsensor 13 erfassten Moments M einzustellen.

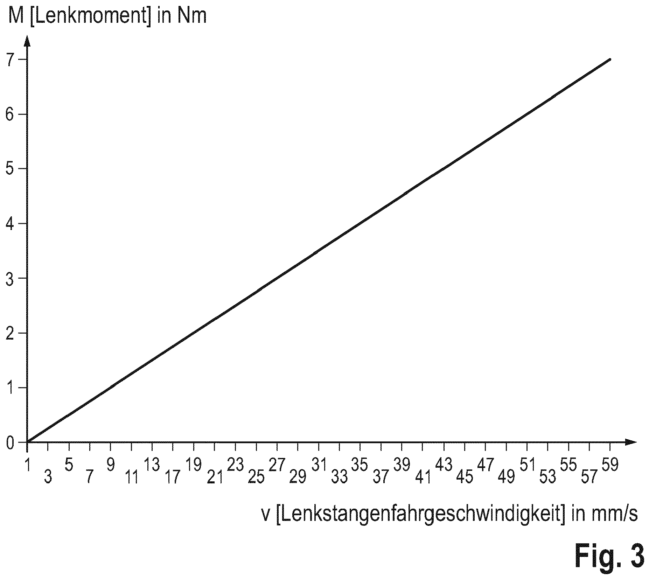

Die Beziehung kann, wie in Fig. 3 beispielhaft dargestellt, als mathematisch stetige Funktion v = f(M) im Steuergerät 30 abgelegt sein. Gemäß dem Kennlinienbeispiel in Fig. 3 wird bei einem Lenkmoment von 3 Nm die Lenkstange 22 beispielsweise mit 30 mm/s in die gewünschte Richtung verfahren. Die in Fig. 3 dargestellte Kennlinie soll jedoch lediglich als ein Beispiel dienen und ist sowohl in der Steigung als auch in der Form anpassbar. So sind insbesondere auch progressive oder degressive Kennlinienverläufe möglich.

Alternativ kann die besagte Beziehung als Wertetabelle im Steuergerät 30 abgelegt sein. Für ein erfasstes Moment M wird dann die Lenkstangenverfahrgeschwindigkeit v für das wertmäßig nächstgelegene abgespeicherte Moment der Wertetabelle verwendet.

Hierdurch bleibt das Fahrzeug selbst bei blockierter Lenkungshandhabe 11 lenkbar.

In einer Ausführungsvariante umfasst das Lenksäulenmodul 10 als weitere mechanische Komponente eine Getriebestufe 14, welche vorliegend beispielhaft durch eine Zahnradstufe veranschaulicht ist. Der Drehmomentsensor 13 ist in diesem Fall kinematisch zwischen der Lenkungshandhabe 11 und der Getriebestufe 14 angeordnet, wohingegen der Lenkwinkelsensor 12 von der Lenkungshabe 11 ausgehend betrachtet der Getriebestufe 14 kinematisch nachgelagert ist.

In Rahmen einer Steer-by-wire Fahrzeuglenkung 1 kann ferner das Lenksäulenmodul 10 einen Haptiksimulator 15 zur Simulation einer Lenkungsrückwirkung an der Lenkungshandhabe 11 aufweisen. Die vom Haptiksimulator 15 erzeugte Lenkungsrückwirkung kann im Hauptbetriebsmodus optional durch ein Rückwirkungssignal h vom Steuergerät 30 beeinflusst werden. Auch der Haptiksimulator 15 könnte eine mechanische Blockade der Lenkungshandhabe 11 verursachen, welche vorliegend durch die Verwendung des Drehmomentsensors 13 im Rückfallmodus abgesichert wird.

Die oben genannte Getriebestufe 14 kann beispielsweise zwischen dem Haptiksimulator 15 und der Lenkungshandhabe 11 angeordnet sein.

Die vorstehend erläuterte Fahrzeuglenkung 1 kann wie folgt betrieben werden. Im Hauptbetriebsmodus werden an dieser der mit einem Lenkbefehl an einer Lenkungshandhabe 11 vorgegebenen Lenkwinkel ϕ und das mit dem Lenkbefehl über die Lenkungshandhabe 11 aufgebrachten Moment M erfasst. Im Hauptbetriebsmodus wird der Lenkungsaktuator 21 in Abhängigkeit des erfassten Lenkwinkels ϕ und gegebenenfalls weiterer Fahrzeugparameter angesteuert.

Kommt es zu einer Störung in Form einer Blockade der Lenkungshandhabe 11, welche mit an sich bekannten Mitteln und/oder Algorithmen festgestellt werden kann, schaltet das Steuergerät 30 in einen Rückfallmodus, um den Lenkungsaktuator 21 in Abhängigkeit des vom Drehmomentsensor 13 erfassten Moments M, insbesondere allein in Abhängigkeit des vom Drehmomentsensor 13 erfassten Moments M sowie gegebenenfalls der Fahrgeschwindigkeit anzusteuern. Neben der Fahrgeschwindigkeit können prinzipiell auch weitere lenkungsexterne Fahrzeugparameter berücksichtigt werden. Dazu wird die im Steuergerät 30 vorgehaltene eine Beziehung für die Lenkstangenverfahrgeschwindigkeit v der Lenkstange 22 des Lenkgetriebes 20 in Abhängigkeit des über Lenkungshandhabe 11 aufgebrachten Moments M genutzt. Durch entsprechende Rückkopplung r der Lage der Lenkstange 22 kann die Lenkstangenverfahrgeschwindigkeit v entsprechend eingeregelt werden.

Lenkt der Fahrer mit einem bestimmten Lenkwinkel ϕ von beispielsweise 20 Grad am Lenksäulenmodul 10, würden sich diese 20 Grad je nach Übersetzung auch am Lenkgetriebe 20 einstellen und das Fahrzeug würde einer entsprechend vorgegebenen Trajektorie folgen. Bei einem blockierenden Lenksäulenmodul 10, durch beispielsweise einen Zahnbruch bei extremer mechanischer Belastung, hätte der Fahrer ohne weitere Abhilfemaßnahmen dann keine Möglichkeit mehr, das Fahrzeug zu lenken. Vielmehr würde dieses der ursprünglich vorgegebenen Trajektorie weiter folgen.

Eine Lenkwinkelvorgabe im Lenksäulenmodul 1 wird bei sich drehenden Zahnrädern 14a in der Getriebestufe 14 im Lenksäulenmodul 10 mit dem internen Lenkwinkelsensor 12 berechnet. Bei blockierten Zahnrädern 14a dreht sich im Lenksäulenmodul 10 kein Zahnrad 14a mehr. Infolgedessen würde an das Lenkgetriebe 20 der statische Lenkradwinkel ϕ übermittelt, der nun nicht mehr frei vom Fahrer einstellbar wäre.

Eine solche Blockierung der Zahnräder 14a im Lenksäulenmodul 10 kann durch interne Messgrößen erkannt werden, so dass der statische Lenkradwinkel ϕ nicht mehr zur Ansteuerung des Lenkgetriebes 20 herangezogen wird, sondern statt dessen der Rückfallmodus wie oben erläutert zur Anwendung kommt, bei welchem der vom Lenkwinkelsensor 12 gemessene Lenkradwinkel ϕ außer Acht bleibt.

Bei dem vorstehend erläuterten ersten Ausführungsbeispiel einer Steer-by-wire Fahrzeuglenkung 1 sind das Lenkgetriebe 20 und das Lenksäulenmodul 10 mechanisch entkoppelt. Das erfindungsgemäße Absicherungskonzept kann jedoch auch bei anderen Lenkungstypen zum Einsatz kommen, wie dies nachfolgend anhand eines zweiten Ausführungsbeispiels für eine Fahrzeuglenkung 1 in Form einer Überlagerungslenkung gemäß Fig. 2 näher erläutert wird.

Bei der Überlagerungslenkung gemäß Fig. 2 sind das Lenksäulenmodul 10 und die Lenkstange 22 des Lenkgetriebes 20 mittels eines Überlagerungsgetriebes 24 mechanisch miteinander gekoppelt. Das Überlagerungsgetriebe 24, beispielsweise in Form eines Planetengetriebes, Harmonic Drive Getriebes oder dergleichen, ermöglicht es, einem von Fahrer aufgebrachten Lenkwinkel ϕ einen zusätzlichen Lenkwinkel ϕ* zu überlagern, wodurch unter anderem eine variable Lenkübersetzung eingestellt werden kann. Dazu greift an einem Eingang des Überlagerungsgetriebes 24 eine Antriebseinrichtung 25 an, welche vom Steuergerät 30 im Hauptbetriebsmodus durch ein Signal h entsprechend angesteuert wird und welche überdies die Funktion des Lenkungsaktuators 21 übernehmen kann.

Die Fahrzeuglenkung 1 gemäß Fig. 2 umfasst somit wiederum ein Lenksäulenmodul 10 mit einer Lenkungshandhabe 11 zur Eingabe eines fahrerseitigen Lenkbefehls, einem Lenkwinkelsensor 12 zur Erfassung eines mit dem Lenkbefehl vorgegebenen Lenkwinkels ϕ und einem Drehmomentsensor 13 zur Erfassung eines über die Lenkungshandhabe 11 im Rahmen eines Lenkbefehls aufgebrachten Moments M.

Weiterhin umfasst die Fahrzeuglenkung 1 gemäß Fig. 2 ein Lenkgetriebe 20 mit einem Lenkungsaktuator 21/25 zur Darstellung des Lenkbefehls an Fahrzeugrädern 2.

Ferner ist wiederum ein Steuergerät 30 vorgesehen, welches derart konfiguriert ist, um im Hauptbetriebsmodus den Lenkungsaktuator 21/25 in Abhängigkeit mittels des Lenkwinkelsensors 12 erfassten Lenkwinkels ϕ anzusteuern, und in einem Rückfallmodus den Lenkungsaktuator 21/25 in Abhängigkeit lediglich des mittels des Drehmomentsensors 13 erfassten, über die Lenkungshandhabe 11 aufgebrachten Moments M anzusteuern.

In dem Steuergerät 30 ist eine Beziehung für eine Lenkstangenverfahrgeschwindigkeit v für eine Lenkstange 22 des Lenkgetriebes 20 in Abhängigkeit des über die Lenkungshandhabe 11 aufgebrachten Moments M abgespeichert, sei es in Form einer mathematischen Funktion, einer Wertetabelle oder dergleichen.

Im Rückfallmodus wird somit vom Steuergerät 30 auf Grundlage dieser Beziehung aus dem erfassten Moment M eine Lenkstangenverfahrgeschwindigkeit v bestimmt und dem Lenkungsaktuator 21/25 als entsprechendes Stellsignal übermittelt.

Hierdurch bleibt das Fahrzeug selbst bei blockierter Lenkungshandhabe 11 lenkbar.

Der Drehmomentsensor 13 ist bei dem Ausführungsbeispiel gemäß Fig. 2 wiederum bevorzugt möglichst nahe zur Lenkungshandhabe 11 angeordnet. Vorzugsweise befindet sich dieser im Bereich einer Welle, über welche die Lenkungshandhabe 11 mit den weiteren mechanischen Komponenten des Lenksäulenmoduls 10 gekoppelt ist.

Fig. 2 zeigt im weiteren Verlauf dieser Welle eine Getriebestufe 14, welche ausgangsseitig mit dem Überlagerungsgetriebe 24 gekoppelt ist. Der Lenkwinkelsensor 12 erfasst den Lenkwinkel ϕ in einem Bereich zwischen der Getriebestufe 14 und dem Überlagerungsgetriebe 24. Kommt es im Bereich der mechanischen Komponenten des Lenksäulenmoduls 10 zu einer Störung, beispielsweise aufgrund nicht-plausibler Sensorsignale des Lenkwinkelsensors 12, schaltet das Steuergerät 30 in den Rückfallmodus, um die Ansteuerung der Lenkgetriebes 20 unter Auslassung der Sensorsignale des Lenkwinkelsensors 12 und unter Verwendung der oben bereits erläuterten Beziehung auf Grundlage der Sensorsignale des Drehmomentsensors 13 zu erzeugen.

Ein Rückkopplungssignal r vom Lenkgetriebe 20 kann wie in dem ersten Ausführungsbeispiel über einen im Bereich der Lenkstange 22 angeordneten Sensor 23 und/oder über einen Lagesensor der Antriebseinrichtung 25 bezogen werden, wobei letztere gleichzeitig den Lenkungsaktuator 21 des Lenkgetriebes 20 darstellen kann.

Die Erfindung wurde vorstehend anhand von Ausführungsbeispielen und weiteren Abwandlungen näher erläutert. Insbesondere können technische Einzelmerkmale, welche oben im Kontext weiterer Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele und die Abwandlungen beschränkt, sondern umfasst alle durch die Patentansprüche definierten Ausgestaltungen.

### Bezugszeichenliste

- 1: Fahrzeuglenkung
- 2: Fahrzeugrad (gelenkt)
- 3: Spurstange
- 10: Lenksäulenmodul
- 11: Lenkungshandhabe
- 12: Lenkwinkelsensor
- 13: Drehmomentsensor
- 14: Getriebestufe
- 14a: Zahnrad
- 15: Haptiksimulator
- 20: Lenkgetriebe
- 21: Lenkungsaktuator
- 22: Lenkstange
- 23: Sensor
- 24: Überlagerungsgetriebe
- 25: Antriebseinrichtung
- 30: Steuergerät
- ϕ: Lenkwinkel
- ϕ*: zusätzlicher Lenkwinkel
- h: Ansteuersignal für den Haptikaktuator
- r: Rückkopplungssignal
- v: Lenkstangenverfahrgeschwindigkeit (Ansteuersignal für den Lenkungsaktuator)
- ü: Ansteuersignal für die Antriebseinrichtung
- M: Moment

## Patentansprüche

1. Kraftfahrzeuglenkung (1), umfassend
ein Lenksäulenmodul (10) mit einer Lenkungshandhabe (11) zur Eingabe eines fahrerseitigen Lenkbefehls, einem Lenkwinkelsensor (12) zur Erfassung eines mit dem Lenkbefehl vorgegebenen Lenkwinkels (ϕ) und einem Drehmomentsensor (13) zur Erfassung eines über die Lenkungshandhabe (11) im Rahmen eines Lenkbefehls aufgebrachten Moments (M),
ein Lenkgetriebe (20) mit einem Lenkungsaktuator (21) zur Darstellung des Lenkbefehls an Fahrzeugrädern (2), und
ein Steuergerät (30), welches derart konfiguriert ist, um in einem Hauptbetriebsmodus den Lenkungsaktuator (21) in Abhängigkeit des mittels des Lenkwinkelsensors (12) erfassten, über die Lenkungshandhabe (11) vorgegebenen Lenkwinkels (ϕ) anzusteuern und in einem Rückfallmodus den Lenkungsaktuator (21) in Abhängigkeit des mittels des Drehmomentsensors (13) erfassten, über die Lenkungshandhabe (11) aufgebrachten Moments (M) anzusteuern,
**dadurch gekennzeichnet, dass**
im Steuergerät (30) eine Beziehung für eine Lenkstangenverfahrgeschwindigkeit (v) für eine Lenkstange (22) des Lenkgetriebes (20) in Abhängigkeit des über die Lenkungshandhabe (11) aufgebrachten Moments (M) abgelegt ist, und
das Steuergerät (30) derart konfiguriert ist, um im Rückfallmodus über den Lenkungsaktuator (21) eine Lenkstangenverfahrgeschwindigkeit (v) in Abhängigkeit des vom Drehmomentsensor (13) erfassten Moments (M) auf Grundlage vorgenannter Beziehung einzustellen.

2. Kraftfahrzeuglenkung (1) nach Anspruch 1, **dadurch gekennzeichnet, dass** die besagte Beziehung als mathematisch stetige Funktion im Steuergerät (30) abgelegt ist.

3. Kraftfahrzeuglenkung (1) nach Anspruch 1, **dadurch gekennzeichnet, dass** die besagte Beziehung als Wertetabelle im Steuergerät (30) abgelegt ist, wobei für ein erfasstes Moment (M) die Lenkstangenverfahrgeschwindigkeit (v) für das wertmäßig nächstgelegene abgespeicherte Moment der Wertetabelle verwendet wird.

4. Kraftfahrzeuglenkung (1) nach einem der Ansprüche 1 bis 3, **dadurch gekennzeichnet, dass** das Lenksäulenmodul (10) eine Getriebestufe (14) umfasst, der Drehmomentsensor (13) kinematisch zwischen der Lenkungshandhabe (11) und der Getriebestufe (14) angeordnet ist und der Lenkwinkelsensor (12) von der Lenkungshabe (11) ausgehend betrachtet der Getriebestufe (14) kinematisch nachgelagert ist.

5. Kraftfahrzeuglenkung (1) nach Anspruch 4, **dadurch gekennzeichnet, dass** das Lenksäulenmodul (10) einen Haptiksimulator (15) zur Simulation einer Lenkungsrückwirkung an der Lenkungshandhabe (11) aufweist und die Getriebestufe (14) zwischen dem Haptiksimulator (15) und der Lenkungshandhabe (11) angeordnet ist.

6. Kraftfahrzeuglenkung (1) nach Anspruch 4 oder 5, **dadurch gekennzeichnet, dass** die Getriebestufe (14) eine Zahnradstufe aufweist.

7. Kraftfahrzeuglenkung (1) nach einem der Ansprüche 1 bis 6, **dadurch gekennzeichnet, dass** das Lenkgetriebe (20) und das Lenksäulenmodul (10) mechanisch entkoppelt sind.

8. Kraftfahrzeuglenkung (1) nach einem der Ansprüche 1 bis 6, **dadurch gekennzeichnet, dass** das Lenkgetriebe (20) und das Lenksäulenmodul (10) mittels eines Überlagerungsgetriebes (24) mechanisch miteinander gekoppelt sind.

9. Verfahren zum Betreiben einer Kraftfahrzeuglenkung (1), umfassend:
Erfassen eines mit einem Lenkbefehl an einer Lenkungshandhabe (11) vorgegebenen Lenkwinkels (ϕ),
Erfassen eines mit dem Lenkbefehl über die Lenkungshandhabe (11) aufgebrachten Moments (M),
Ansteuern eines Lenkungsaktuators (21) eines Lenkgetriebes (20) zur Darstellung des Lenkbefehls an Fahrzeugrädern (2), wobei
in einem Hauptbetriebsmodus der Lenkungsaktuator (21) in Abhängigkeit des erfassten, über die Lenkungshandhabe (11) vorgegebenen Lenkwinkels (ϕ) angesteuert wird und
in einem Rückfallmodus der Lenkungsaktuator (21) in Abhängigkeit des erfassten, über die Lenkungshandhabe (11) aufgebrachten Moments (M) angesteuert wird,
**dadurch gekennzeichnet, dass**
eine Beziehung für eine Lenkstangenverfahrgeschwindigkeit (v) einer Lenkstange (22) des Lenkgetriebes (20) in Abhängigkeit des über Lenkungshandhabe (11) aufgebrachten Moments (M) vorgehalten wird, und
im Rückfallmodus unter Berücksichtigung besagter Beziehung über den Lenkungsaktuator (21) die Lenkstangenverfahrgeschwindigkeit (v) in Abhängigkeit des vom Drehmomentsensor erfassten Moments (M) eingestellt wird.

## Claims

1. Motor vehicle steering system (1), comprising
a steering column module (10) with a steering handle (11) for inputting a driver-side steering command, a steering angle sensor (12) for detecting a steering angle (ϕ) specified by way of the steering command, and a torque sensor (13) for detecting a torque (M) applied via the steering handle (11) in the course of a steering command, a steering gear (20) with a steering actuator (21) for enacting the steering command at vehicle wheels (2), and a control unit (30) which is configured so as to actuate the steering actuator (21) in a main operating mode in a manner which is dependent on the steering angle (ϕ) which is detected by means of the steering angle sensor (12) and is specified via the steering handle (11), and so as to actuate the steering actuator (21) in a fall-back mode in a manner which is dependent on the torque (M) which is detected by means of the torque sensor (13) and is applied via the steering handle (11),
**characterized in that** a relationship for a steering rod moving speed (v) for a steering rod (22) of the steering gear (20) in a manner which is dependent on the torque (M) which is applied via the steering handle (11) is stored in the control unit (30), and
the control unit (30) is configured so as to set a steering rod moving speed (v) in the fall-back mode via the steering actuator (21) on the basis of the abovementioned relationship in a manner which is dependent on the torque (M) which is detected by the torque sensor (13).

2. Motor vehicle steering system (1) according to Claim 1, **characterized in that** the stated relationship is stored in the control unit (30) as a mathematically continuous function.

3. Motor vehicle steering system (1) according to Claim 1, **characterized in that** the stated relationship is stored in the control unit (30) as a value table, wherein the steering rod moving speed (v) for the closest stored torque in value terms in the value table is used for a detected torque (M).

4. Motor vehicle steering system (1) according to one of Claims 1 to 3, **characterized in that** the steering column module (10) comprises a gear stage (14), the torque sensor (13) is arranged kinematically between the steering handle (11) and the gear stage (14), and the steering angle sensor (12) is positioned kinematically downstream of the gear stage (14) as viewed starting from the steering handle (11).

5. Motor vehicle steering system (1) according to Claim 4, **characterized in that** the steering column module (10) comprises a haptic simulator (15) for simulating steering feedback at the steering handle (11), and the gear stage (14) is arranged between the haptic simulator (15) and the steering handle (11).

6. Motor vehicle steering system (1) according to Claim 4 or 5, **characterized in that** the gear stage (14) comprises a gearwheel stage.

7. Motor vehicle steering system (1) according to one of Claims 1 to 6, **characterized in that** the steering gear (20) and the steering column module (10) are mechanically decoupled.

8. Motor vehicle steering system (1) according to one of Claims 1 to 6, **characterized in that** the steering gear (20) and the steering column module (10) are coupled mechanically to one another by means of a superimposing gear unit (24).

9. Method for operating a motor vehicle steering system (1), comprising:
detecting a steering angle (ϕ) which is specified by way of a steering command at a steering handle (11),
detecting a torque (M) which is applied by way of the steering command via the steering handle (11),
actuating a steering actuator (21) of a steering gear (20) for enacting the steering command at vehicle wheels (2), wherein,
in a main operating mode, the steering actuator (21) is actuated in a manner which is dependent on the detected steering angle (ϕ) which is specified via the steering handle (11), and,
in a fall-back mode, the steering actuator (21) is actuated in a manner which is dependent on the detected torque (M) which is applied via the steering handle (11),
**characterized in that**
a relationship for a steering rod moving speed (v) of a steering rod (22) of the steering gear (20) in a manner which is dependent on the torque (M) which is applied via the steering handle (11) is provided, and,
in the fall-back mode, with consideration of the stated relationship, the steering rod moving speed (v) is set via the steering actuator (21) in a manner which is dependent on the torque (M) which is detected by the torque sensor.

## Revendications

1. Direction (1) de véhicule automobile, comprenant
un module (10) de colonne de direction avec une poignée de direction (11) pour l'entrée d'une commande de direction côté conducteur, un capteur (12) d'angle de direction pour la détection d'un angle de direction (ϕ) prédéfini au moyen de la commande de direction, et un capteur de couple (13) pour la détection d'un couple (M) appliqué par la poignée de direction (11) dans le cadre d'une commande de direction,
un mécanisme de direction (20) ayant un actionneur de direction (21) pour représenter la commande de direction sur les roues du véhicule (2), et
un appareil de commande (30) qui est configuré de manière à commander, dans un mode de fonctionnement principal, l'actionneur de direction (21) en fonction de l'angle de direction (ϕ) détecté au moyen du capteur d'angle de direction (12) et prédéfini par la poignée de direction (11), et à commander, dans un mode de sauvegarde, l'actionneur de direction (21) en fonction du couple (M) détecté au moyen du capteur de couple (13) et appliqué par la poignée de direction (11),
**caractérisée en ce que**
dans l'appareil de commande (30) est enregistrée une relation pour une vitesse de déplacement (v) de la barre de direction pour une barre de direction (22) du mécanisme de direction (20) en fonction du couple (M) appliqué par la poignée de direction (11), et l'appareil de commande (30) est configuré de manière à régler, en mode de sauvegarde, par l'intermédiaire de l'actionneur de direction (21), une vitesse (v) de déplacement de barre de direction en fonction du couple (M) détecté par le capteur de couple (13) en fonction de la relation précitée.

2. Direction (1) de véhicule automobile selon la revendication 1, **caractérisée en ce que** ladite relation est stockée dans l'appareil de commande (30) sous la forme d'une fonction mathématique continue.

3. Direction (1) de véhicule automobile selon la revendication 1, **caractérisée en ce que** ladite relation est mémorisée sous forme de tableau de valeurs dans l'appareil de commande (30), la vitesse (v) de déplacement de barre de direction étant utilisée pour un couple (M) détecté pour le couple mémorisé le plus proche en valeur du tableau de valeurs.

4. Direction (1) de véhicule automobile selon l'une des revendications 1 à 3, **caractérisée en ce que** le module (10) de colonne de direction comprend un étage de transmission (14), le capteur de couple (13) est agencé cinématiquement entre la poignée de direction (11) et l'étage de transmission (14), et le capteur d'angle de direction (12) est agencé cinématiquement en aval de l'étage de transmission (14), en partant de la poignée de direction (11).

5. Direction (1) de véhicule automobile selon la revendication 4, **caractérisée en ce que** le module (10) de colonne de direction comporte un simulateur haptique (15) pour simuler une réaction de direction sur la poignée de direction (11) et l'étage de transmission (14) est agencé entre le simulateur haptique (15) et la poignée de direction (11).

6. Direction (1) de véhicule automobile selon la revendication 4 ou la revendication 5, **caractérisée en ce que** l'étage de transmission (14) comporte un étage d'engrenages.

7. Direction (1) de véhicule automobile selon l'une des revendications 1 à 6, **caractérisée en ce que** le mécanisme de direction (20) et le module (10) de colonne de direction sont mécaniquement découplés.

8. Direction (1) de véhicule automobile selon l'une des revendications 1 à 6, **caractérisée en ce que** le mécanisme de direction (20) et le module (10) de colonne de direction sont couplés mécaniquement l'un à l'autre au moyen d'un engrenage de superposition (24).

9. Procédé de fonctionnement d'un direction (1) de véhicule automobile, comprenant :
le fait de détecter un angle de direction (ϕ) prédéfini par une commande de direction sur une poignée de direction (11),
le fait de détecter un couple (M) appliqué par la poignée de direction (11) avec la commande de direction,
le fait de commander un actionneur de direction (21) d'un mécanisme de direction (20) pour représenter la commande de direction sur des roues de véhicule (2) ;
dans un mode de fonctionnement principal, l'actionneur de direction (21) est commandé en fonction de l'angle de direction (ϕ) détecté et prédéfini par la poignée de direction (11), et
dans un mode de sauvegarde, l'actionneur de direction (21) est commandé en fonction du couple (M) détecté et appliqué par la poignée de direction (11),
**caractérisé en ce que**
une relation pour une vitesse de déplacement (v) d'une barre de direction (22) du mécanisme de direction (20) est conservée en fonction du couple (M) appliqué par la poignée de direction (11), et
en mode de sauvegarde, la vitesse de déplacement (v) de la barre de direction est réglée par l'actionneur de direction (21) en fonction du couple (M) détecté par le capteur de couple de rotation, en tenant compte de ladite relation.
